# EUROPÄISCHE PATENTSCHRIFT

(11) **EP 1 262 012 B1**
(45) Veröffentlichungstag und Bekanntmachung des Hinweises auf die Patenterteilung: **20.05.2009**
(21) Anmeldenummer: 01915196.8
(22) Anmeldetag: 06.02.2001
(51) Int. Cl.: H02K 41/02

(54) **LINEARMOTOR FÜR EINEN LINEARANTRIEB EINER MAGNETSCHWEBEBAHN**
LINEAR MOTOR FOR A LINEAR DRIVE MECHANISM OF A MAGNET LEVITATION TRANSPORT SYSTEM
MOTEUR LINEAIRE POUR L'ORGANE D'ENTRAINEMENT LINEAIRE D'UN TRAIN A SUSTENTATION MAGNETIQUE

(30) Priorität: 09.03.2000 DE 10011118
(43) Veröffentlichungstag der Anmeldung: 04.12.2002
(73) Patentinhaber: ThyssenKrupp Transrapid GmbH, 34112 Kassel (DE); Draka Industrial Cable GmbH, 42369 Wuppertal (DE)
(72) Erfinder: FUNKEN, Peter, 50226 Frechen (DE); ROSIN, Christian, 86934 Reichling (DE)
(74) Vertreter: Dahlkamp, Heinrich-Leo
(86) Internationale Anmeldenummer: PCT/EP2001/001253
(87) Internationale Veröffentlichungsnummer: WO 2001/067585

(56) Entgegenhaltungen:
- DE-A- 2 656 389
- DE-A- 2 824 951
- DE-A- 19 724 283
- DE-A- 19 833 418

## Beschreibung

Die Erfindung betrifft einen Linearmotor für einen Linearantrieb einer Magnetschwebebahn, mit einer Mehrzahl von in einer Reihe angeordneten Induktorträgern, die jeweils quer zur Längsrichtung Nuten mit gleichen Abständen zueinander aufweisen, und mit mindestens drei Linearmotorleitungen, die mäanderförmig zu Wicklungen gewickelt sind und abschnittsweise in den Nuten angeordnet sind, wobei die Wicklungen im Abstand A angeordnete Wicklungsköpfe aufweisen.

Die dreiphasige Wechselstromwicklung eines Linearmotors besteht aus drei mäanderförmig verlegten Linearmotorleitungen, die ein elektromagnetisches Wanderfeld erzeugen. Linearmotoren werden beispielsweise zum Antrieb einer Magnetschwebebahn für Fernschnellverkehr eingesetzt.

Die Herstellung und Verlegung der Wechselstromwicklung eines Linearmotors erfolgt mit einem Verlegefahrzeug, das auf den Fahrweg aufgesetzt ist (DE 37 37 719 Al).

Die Länge einer Wicklungsperiode ist durch die Nut-/Zahngeometrie der Induktorpakete vorgegeben und über die Länge des Fahrwegträgers nahezu konstant. Der Induktor kann jedoch nicht auf der gesamten Länge des Fahrwegs als einheitlicher Körper oder mit einheitlicher Geometrie hergestellt und/oder angebracht werden, außerdem treten Fertigungstoleranzen auf. Weiterhin hat der Fahrweg Unterbrechungen, die beispielsweise durch Stoßfugen an Brückenkonstruktionen, zum Ausgleich von Innenbahn-Außenbahn-Längenunterschieden oder durch Längenkompensatoren (für Temperaturänderungen) bedingt sind.

Zwar können bei der Herstellung und Verlegung der Wicklung Abweichungen von Nennmaßen berücksichtigt werden, doch dies ist nur insoweit möglich, als diese Abweichungen von vornherein exakt bekannt sind. Die während der gesamten Nutzungsdauer der Motorwicklung durch Wärmedehnung und dynamische Belastung auftretenden Längenänderungen an einer Unstetigkeitsstelle führen zu einer Dehn- und Stauchbelastung der Wicklungsköpfe in Fahrweglängsfichtung.

Als mögliche Auswirkung der Belastungen sei hier genannt: Beeinträchtigung der Funktionsstabilität hinsichtlich Betriebsstrom-Leitbarkeit, Betriebs- oder Störspannungsfestigkeit und mechanisch-geometrischer Einbaumaßhaltigkeit.

Geringfügige Längentoleranzen können durch die elastischen Eigenschaften der Wicklungsköpfe oder der Leitung ausgeglichen werden. Dies wäre beispielsweise bei ebenerdigen Plattenfahrwegen mit einer Länge bis zu 6 m möglich. Bei größeren Längen addieren sich Längentoleranzen und die Motorwicklung kann nicht mehr mit einheitlichem Maß kontinuierlich hergestellt werden. Es wären Sondermaßnahmen bei der Wicklungsführung notwendig. Es ist auch schon überlegt worden, zum thermischen und/oder dynamischen Längenausgleich die Motorwicklung mit einer Dehnungsschlaufe (vgl. DE 198 334 18 A1) an einer Unstetigkeitsstelle zu verlegen. Dies hat jedoch entschiedene Nachteile. Die Wicklungsherstellung ist nicht kontinuierlich möglich. Es tritt Stillstand der Montagemaschine an jeder Unstetigkeitsstelle zum Ablängen der Leitung und zur Montage der Leitungsführung auf. Es entsteht Materialmehrverbrauch. (Wanderfeld-leitung, Schellen, Befestigungsschienen etc.). Insbesondere der Stillstand der Verlegemaschinen an jeder Unstetigkeitsstelle ist äußerst hinderlich.

Der Erfindung liegt daher das technische Problem zugrunde, eine Wicklungsformation für eine Linearmotorleitung an Unstetigkeitsstellen zwischen Induktorträgern anzugeben, die die aufgeführten Nachteile umgeht und eine kontinuierliche und kostengünstige Wicklungsherstellung ermöglicht.

Das zuvor aufgezeigte technische Problem wird durch einen Linearmotor mit den Merkmalen des Anspruches 1 dadurch gelöst, daß die Längen A' der Wicklungsköpfe 16.1', 16.2', 16.3' der mindestens drei Linearmotorleitungen an einer Unstetigkeitsstelle, d. h. an einer Stelle mit vergrößertem Abstand zwischen zwei benachbart angeordneten Induktorträgern, in der Ebene der Wicklungsköpfe verlängert sind und dass einige Nuten in der Nähe der jeweiligen Unstetigkeitsstelle nicht von den Wicklungen belegt sind. Weitere Ausgestaltungen finden sich in den Unteransprüchen. Das Wesentliche der Erfindung liegt darin, dass an Unstetigkeitsstellen die Wicklungsköpfe der Mäander an der Unstetigkeitsstelle nicht regelrecht, sondern verlängert ausgeformt werden.

Bei der erfindungsgemäßen Formgebung der Mäander an einer Unstetigkeitsstelle wird die Länge des Wicklungskopfes in Fahrweglängsrichtung gestreckt, so dass statische Längenabweichungen im Wesentlichen ausgeglichen werden. Die bei einer dynamischen Längenänderung des Dehnspaltes zwischen zwei benachbarten Fahrwegträgern auftretenden Dehn- und Stauchbelastungen wirken zudem auf einen verlängerten Leitungsabschnitt. Die Belastungen werden also insgesamt geringer und können von den elastischen Eigenschaften der Wicklungsköpfe aufgenommen werden.

Es bestehen mehrere Möglichkeiten, die Mäander mit verlängerten Wicklungsköpfen auszuführen. In bevorzugter Weise sind die Längen der verlängerten Wicklungsköpfe der mindestens drei Linearmotorleitungen um im wesentlichen den gleichen Betrag verlängert. Dadurch wird gewährleistet, daß nach der Überbrückung der Unstetigkeitsstelle die mindestens drei Linearmotorleitungen wieder in der gleichen Phasenanordnung angeordnet sind.

Weiterhin wird vorgeschlagen, daß zur Vereinfachung der Herstellung der verlängerten Wicklungsköpfe diese in Abhängigkeit von der Länge der auszugleichenden Unstetigkeitsstelle in vorgegebenen Intervallen verlängert sind. Das bedeutet, daß dann, wenn der auszugleichenden Längenunterschied innerhalb eines vorgegebenen Intervalles liegt, die Längen der Wicklungsköpfe um einen zugeordneten vorgegebenen Betrag verlängert werden. Dadurch werden die Längenunterschiede ausreichend ausgeglichen, ohne daß zu große mechanische Spannungen in den Wicklungsköpfen aufgefangen werden müssen, während die Herstellung der verlängerten Wicklungsköpfe dadurch vereinfacht wird, daß die Vorrichtung zur Herstellung der verlängerten Wicklungsköpfe nur für vorgegebene Längenunterschiede eingerichtet sein muß.

Sinnvoll ist es weiterhin, benachbarte Wicklungsköpfe der drei Phasen gemeinsam auf einer Seite des Induktorträgers auszubilden. Wegen der besseren Zugänglichkeit wird vorgeschlagen, die verlängerten Wicklungsköpfe auf der Außenseite des Induktorträgers auszubilden, also nicht an der Fahrweginnenseite.

Somit läßt sich die Wicklung über den gesamten Linearmotorabschnitt kontinuierlich herstellen und verlegen, ohne daß Unterbrechungen auftreten. Es wird in einer zeitranggleichen anderen Patentanmeldung vorgeschlagen, die Nut-/Zahngeometrie während der Herstellung der Mäanderwicklungen durch eine Meßeinrichtung an Ort und Stelle auszumessen und die Mäander genau nach der ausgemessenen Nut-/Zahn-geometrie zu formen. Mit der hier vorgestellten Erfindung ist es dann ein leichtes, mit der Meßeinrichtung Unstetigkeitsstellen anzufahren und auszumessen und voll automatisch die nach dieser Erfindung 'verlängerte' Mäanderausbildung individuell paß- und ortsgenau zu formen und einzulegen.

Die verlängerten Wicklungsköpfe entsprechend der Erfindung können während der Nutzungszeit ihre Formstabilität durch die dauernden Wechselbelastungen (Dehnen und Stauchen) verlieren und sich nach unten absenken. Dabei könnten die Wicklungsköpfe aus dem Freiraum hinausragen, der durch das Übergreifen des Läufers des Schwebefahrzeug gebildet wird. Über den Freiraum hinausragende Wicklungsköpfe würden während der Überfahrt mit einem Schwebefahrzeug berührt und beschädigt werden können.

Die Wicklungsköpfe sollten daher fixiert werden. Zur Lagefixierung der verlängerten Wicklungsköpfe, an einer Unstetigkeitsstelle wird daher vorgeschlagen, zusätzliche Befestigungselemente wie Haltegurte oder Bleche an den Fahrwegträger anzubringen. Sie sind jedoch verhältnismäßig aufwendig.

Eine weitere Ausgestaltung der Erfindung liegt darin, eine einfache und kostengünstig herzustellende zusätzliche Halterung für die Wicklungsköpfe an Unstetigkeitsstellen anzugeben und dabei die nicht belegten Nuten einzubeziehen. Hierzu sollen in nicht belegte Nuten Haltemittel einlegbar sein, die die Wicklungsköpfe fixieren oder auf denen sich die Wicklungsköpfe abstützen können.

Hierzu wird vorgeschlagen, mindestens einen vorgefertigten, starren Stab unverlierbar in eine oder mehrere nicht durch die Wicklung belegte Statornuten einzulegen, auf dem sich die verlängerten Wicklungsköpfe abstützen können. Diese Montageleistungen könnten unmittelbar im Nachgang zur Wicklungsherstellung erbracht werden.

Ein Ausführungsbeispiel der Erfindung wird in der Zeichnung dargestellt. In der Zeichnung zeigen
- Fig. 1: eine Sicht unter den Fahrweg mit einer Unstetig- keitsstelle,
- Fig. 2: eine Seitenansicht derselben Position,
- Fig. 3: einen Schnitt durch die Seitenansicht und
- Fig. 4: ein Detail am Haltestab.

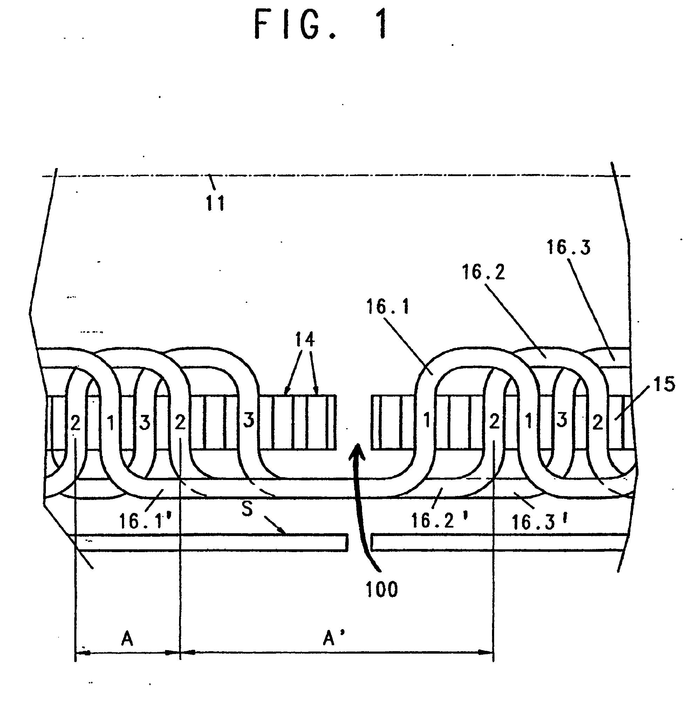

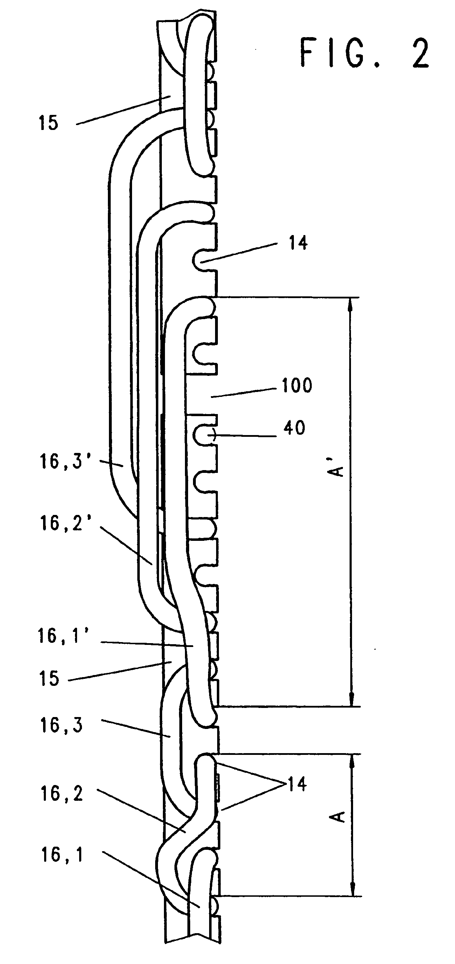

In den Fig. 1 und 2 ist der Wicklungsverlauf der Linearmotorleitungen 1, 2, 3 an einer Stelle eines Stoßes oder eines Dehnspalts zwischen zwei Induktorträgern 15 gezeigt. Ein Dehnspalt bildet die Unstetigkeitsstelle 100. Vor und hinter der Unstetigkeitsstelle 100 sind die Statornuten 14 dicht bei dicht mit mäanderförmigen Wicklungen 16 belegt. Eine Wicklungsperiode oder ein Wicklungskopf 16.1, 16.2 und 16.3 hat die Länge A.

In Fig. 2 sind besonders die Kröpfungen der Mäander sichtbar. Die Kröpfungen sind erforderlich, weil sich die Wicklungsköpfe 16.1, 16.2 und 16.3 überkreuzen. Durch das Übereinanderlegen der Wicklungsköpfe 16.1, 16.2 und 16.3 kann der vorhandene Raum optimal ausgefüllt werden.

An der Unstetigkeitsstelle sind die Wicklungsköpfe 16.1', 16.2' und 16.3' auf der Fahrwegaußenseite (Bezugszeichen 11 = Fahrwegmitte) gemäß der Erfindung verlängert ausgebildet, wobei sie durch die vorgeschlagene Maßnahme die Periodenlänge A' erhalten. Die Periodenlänge A' entspricht dabei ungefähr dem dreifachen der Periodenlänge A, die wiederum dem dreifachen der Abstände der Nuten 14 zueinander entspricht. Durch die Ausgestaltung der Periodenlänge A' als ein Mehrfaches der Periodenlänge A wird erreicht, daß trotz der Unstetigkeitsstelle 100 die räumlich Phasenverteilung entlang des Fahrweges weitgehend ungestört ist. Selbstverständlich hängt es von der Breite der Unstetigkeitsstelle 100 ab, wie genau das Mehrfache der Periodenlänge A eingehalten werden kann. In jedem Fall kann jedoch durch geschickte Auswahl der Nuten 14 hinter einer Unstetigkeitsstelle 100 erreicht werden, daß die Abweichung der Periodenlänge A' von einem Mehrfachen der Periodenlänge A geringer als der Abstand zweier Nuten 14 ist.

In Fig. 1 ist - wie bereits beschrieben - dargestellt, daß die verlängerten Wicklungsköpfe 16.1', 16.2' und 16.3' der Linearmotorleitungen 1, 2, und 3 auf der der Außenseite des Fahrweges zugewandten Seite der Induktorträger 15 angeordnet sind. Dadurch wird die Zugänglichkeit der verlängerten Wicklungsköpfe 16.1', 16.2' und 16.3' vereinfacht. Dabei wird ein relativ großer Abstand zwischen aufeinander folgenden Wicklungen jeder der Linearmotorleitungen 1, 2 und 3 in Kauf genommen. Dagegen ist es bspw. auch möglich, sämtliche Nuten mit Wicklungen zu belegen und die verlängerten Wicklungsköpfe entweder auf der einen oder der anderen Seite der Induktorträger zu verlängern. Dabei ist es dann lediglich erforderlich, die Wicklungsköpfe um die Länge der Unstetigkeitsstelle 100 zu verlängern. Hinter der Unstetigkeitsstelle 100 können dann in der bisherigen Reihenfolge die Wicklungen 16 der Linearmotorleitungen 1, 2 und 3 angeordnet werden. Handelt es sich bei der Unstetigkeitsstelle 100 nur um einen geringen Spalt, so wird ein nahezu stetiger Übergang des von den Linearmotorleitungen 1, 2 und 3 erzeugten elektromagnetischen Wanderfeldes erreicht.

Da einige Nuten 14 in der Nähe der Unstetigkeitsstelle 100 in Fig. 1 leer bleiben, kann mindestens eine der nicht belegten Nuten ein Halteelement 40 aufnehmen, welches der Unterstützung der verlängerten und gekröpften Wicklungsköpfe 16.1', 16.2' und 16.3' dient.

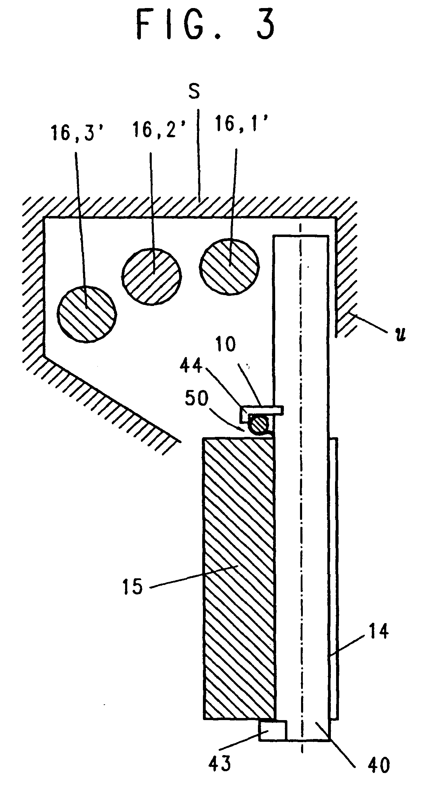

In Fig. 3 ist der Schnitt B-B durch die Anordnung in Fig. 2 vergrößert dargestellt. Die Wicklungsköpfe 16.1', 16.2', 16.3' liegen in einem Freiraum 12 der nach außen (S) durch die Seitenführschiene und nach unten (U) durch den Läufer des Schwebfahrzeugs gebildet wird. In einer der Nuten 14 des Induktorpakets 15 ist von der Induktoraußenseite ein zylindrischer Haltestab 40 eingeschoben, auf dem sich der untere Wicklungskopf 16.1' abstützt. In der Fig. 3 ist dargestellt, daß die beiden anderen Wicklungsköpfe 16.2' und 16.3' auf dem unteren Wicklungskopf aufliegen. Jede andere Form der Fixierung oder Abstützung der Wicklungsköpfe zur Erzielung des genannten Zwecks ist auch durchführbar.

Der Haltestab 40 ist als Formteil aus Epoxidgießharz gebildet und sitzt unverlierbar in der Statornut 14. Der Haltestab 40 trägt an seinem Ende und etwa in seiner Mitte zwei Kragen 43 und 44 in einem Abstand, der etwas größer ist als die Nutlänge. Der Abstand der beiden Kragen 43 und 44voneinander wird so bemessen, daß es zu einer genauen und sicheren Einbaulage kommt. Die Breite 49 der Kragen ist kleiner als der Durchmesser der Nut 14. Beim. Einschieben befinden sich die Kragen 43, 44 in einer Position nach unten (zur Nutaustrittseite). Nach dem Einschieben wird der Haltestab um ca. 180° gedreht. Hierbei drehen sich die Kragen 43 und 44 von der Nutöffnung zum Nutuntergrund. Der Haltestab 40 ist in der Längsrichtung durch die Kragen 43 und 44 fixiert. An der Außenseite des Induktors ist eine Erdungsleitung 10 in einem Federkanal 50 befestigt. Funktion und Bedeutung einer Erdungsleitung ist ausführlich im deutschen Patent DE 196 20 222.1 Cl bekannt gemacht geworden.

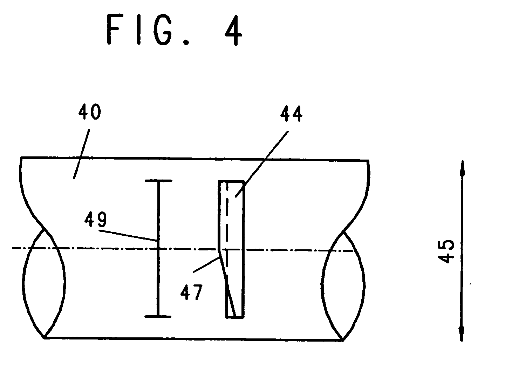

In Fig. 4 ist das Detail des Kragens 44 am Haltestab 40 gezeigt. Die Breite 49 des Kragens 44 ist kleiner als der Durchmesser 45 des Haltestabs. Der Kragen 44 ist angeschrägt 47, so daß er beim Verdrehen hinter dem Federkanal 50 (Fig. 3) aufgrund dessen elastischer Verformbarkeit in der Endstellung hinter dem Federkanal einrastet und von ihm dann am Rückdrehen gehindert wird.

## Patentansprüche

1. Linearmotor für einen Linearantrieb einer Magnetschwebebahn,
- mit einer Mehrzahl von in einer Reihe angeordneten Induktorträgern (15), die jeweils quer zur Längsrichtung Nuten (14) mit gleichen Abständen zueinander aufweisen, und
- mit mindestens drei Linearmotorleitungen (1, 2, 3), die mäanderförmig zu Wicklungen (16) gewickelt sind und abschnittsweise in den Nuten (14) angeordnet sind,
- wobei die Wicklungen (16) im Abstand (A) angeordnete Wicklungsköpfe (16.1, 16.2, 16.3) aufweisen,
**dadurch gekennzeichnet,**
**dass** die Längen (A') der Wicklungsköpfe (16.1', 16.2', 16.3') der mindestens drei Linearmotorleitungen (1, 2, 3) an einer Unstetigkeitsstelle (100), d. h. an einer Stelle mit vergrößertem Abstand zwischen zwei benachbart angeordneten Induktorträgern (15), in der Ebene der Wicklungsköpfe 16.1', 16.2', 16.3' verlängert sind und
- **dass** einige Nuten in der Nähe der jeweiligen Unstetigkeitsstelle (100) nicht von den Wicklungen (16) belegt sind.

2. Linearmotor nach Anspruch 1, **dadurch gekennzeichnet, daß** die Längen (A') der Wicklungsköpfe (16.1', 16.2', 16.3') der mindestens drei Linearmotorleitungen (1, 2, 3) um im wesentlichen den gleichen Betrag verlängert sind.

3. Linearmotor nach Anspruch 1 oder 2, **dadurch gekennzeichnet, daß** die Längen (A') der Wicklungsköpfe (16.1', 16.2', 16.3') in Abhängigkeit von der Länge der auszugleichenden Unstetigkeitsstelle (100) in vorgegebenen Intervallen verlängert sind.

4. Linearmotor nach einem der Ansprüche 1 bis 3, **dadurch gekennzeichnet, daß** die Längen (A') der Wicklungsköpfe (16.1', 16.2', 16.3') im wesentlichen einem Mehrfachen der Abstände (A) entsprechen.

5. Linearmotor nach einem der Ansprüche 1 bis 4, **dadurch gekennzeichnet, daß** die verlängerten Wicklungsköpfe (16.1', 16.2', 16.3') der Linearmotorleitungen (1, 2, 3) auf der gleichen Seite der Induktorträger (15) angeordnet sind.

6. Linearmotor nach Anspruch 5, **dadurch gekennzeichnet, daß** die verlängerten Wicklungsköpfe (16.1', 16.2', 16.3') auf der der Außenseite des Fahrweges zugewandten Seite der Induktorträger (15) angeordnet sind.

7. Linearmotor nach einem der Ansprüche 1 bis 6, **dadurch gekennzeichnet, daß** in mindestens eine von einer Wicklung (16) nicht belegte Nut (14) eines Induktorträgers (15) ein Halteelement (40) für verlängerte Wicklungsköpfe (16.1', 16.2', 16.3') eingelegt ist.

8. Linearmotor nach Anspruch 7, **dadurch gekennzeichnet, daß** das Halteelement (40) unverlierbar eingelegt ist.

9. Linearmotor nach Anspruch 7 oder 8, **dadurch gekennzeichnet, daß** das Halteelement ein zylindrischer Haltestab (40) ist.

10. Linearmotor nach einem der Ansprüche 7 bis 9, **dadurch gekennzeichnet, daß** das Halteelement (40) nichtmetallisch ausgebildet ist.

## Claims

1. A linear motor for a linear drive mechanism of a magnetic levitation transport system, with said linear motor being comprised of a plurality of inductor supports (15) which are arranged in a row and which have grooves (14) each crosswise to the longitudinal direction, said grooves being substantially equal distances apart from each other, and at least three linear motor lines (1, 2, 3) which are wound into windings (16) in a meandering shape and which are located in the grooves (14) in sections, with said windings (16) having winding heads (16.1, 16.2, 16.3) that are situated a distance (A) apart, **characterized in that** the lengths (A') of the winding heads (16.1', 16.2', 16.3') of the at least three linear motor lines (1, 2, 3) are extended at discontinuity point (100), that is a place with enlarged distance between two adjacent inductor supports (15) and that some grooves situated near the discontinuity point (100) are not occupied by windings (16).

2. A linear motor pursuant to Claim 1, **characterized in that** the lengths (A') of the winding heads (16.1', 16.2', 16.3') of the at least three linear motor lines (1, 2, 3) are extended by a mainly equal amount.

3. A linear motor pursuant to Claim 1 or 2, **characterized in that** the lengths (A') of the winding heads (16.1', 16.2', 16.3') are extended in pre-defined intervals, depending upon the length of the discontinuity point (100) to be offset.

4. A linear motor pursuant to any one of Claims 1 to 3, **characterized in that** the lengths (A') of the winding heads (16.1', 16.2', 16.3') mainly correspond to a multiple of the distances (A).

5. A linear motor pursuant to any one of Claims 1 to 4, **characterized in that** the extended winding heads (16.1', 16.2', 16.3') are situated on the same side of the inductor supports (15).

6. A linear motor pursuant to Claim 5, **characterized in that** the extended winding heads (16.1', 16.2', 16.3') are situated on the side of inductor supports (15) that faces the outside of the track way.

7. A linear motor pursuant to any one of Claims 1 to 6, **characterized in that** a retainer element (40) for extended winding heads (16.1', 16.2', 16.3') is laid into at least one of a groove (14) of an inductor support (15) which is not occupied by a winding (16).

8. A linear motor pursuant to Claim 7, **characterized in that** the retainer element (40) is captivated.

9. A linear motor pursuant to Claim 7 or Claim 8, **characterized in that** the retainer element is a cylindrical retainer bar (40).

10. A linear motor pursuant to any one of Claims 7 to 9, **characterized in that** the retainer element (40) is of a non-metallic configuration.

## Revendications

1. Moteur linéaire pour l'organe d'entraînement d'un train à suspension magnétique,
- ledit moteur linéaire comprenant un grand nombre de supports d'inducteur (15) qui sont arrangés en une ligne et présentent des rainures (14) perpendiculairement au sens longitudinal, lesdites rainures étant essentiellement à une même distance les unes des autres ;
- et au moins trois conduites de moteur linéaire (1, 2, 3) qui sont enroulées sous forme de méandres pour former des bobines (16) et logées en groupes dans les rainures (14) ;
- et les bobines (16) possédant des têtes de bobine (16.1', 16.2', 16.3') situées à une distance (A),
**caractérisé en ce que**
les longueurs (A') des têtes de bobine (16.1', 16.2', 16.3') des au moins trois conduites de moteur linéaire (1, 2, 3) sont rallongées à un point de discontinuité (100), c'est-à-dire à un point présentant un écart agrandi entre deux supports d'inducteur voisins (15) dans le plan des têtes de bobine (16.1', 16.2', 16.3') et que
- quelques rainures situées à proximité du point de discontinuité (100) ne sont pas occupées par les bobines (16).

2. Moteur linéaire selon la revendication 1, **caractérisé en ce que** les longueurs (A') des têtes de bobine (16.1', 16.2', 16.3') des au moins trois conduites de moteur (1, 2, 3) sont rallongées pour l'essentiel de la même valeur.

3. Moteur linéaire selon la revendication 1 ou 2, **caractérisé en ce que** les longueurs (A') des têtes de bobine (16.1', 16.2', 16.3') sont rallongées à des intervalles prédéfinis en fonction de la longueur du point de discontinuité (100) à compenser.

4. Moteur linéaire selon la revendication 1 à 3, **caractérisé en ce que** les longueurs (A') des têtes de bobine (16.1', 16.2', 16.3') correspondent pour l'essentiel à un multiple des écarts (A).

5. Moteur linéaire selon une des revendications 1 à 4, **caractérisé en ce que** les têtes de bobine rallongées (16.1', 16.2', 16.3') des conduites de moteur linéaire (1, 2, 3) sont ordonnées du même côté des supports d'inducteur (15).

6. Moteur linéaire selon la revendication 5, **caractérisé en ce que** les têtes de bobine rallongées (16.1', 16.2', 16.3') sont logées du côté des supports d'inducteur (15) qui est opposé au côté extérieur de la voie de roulement.

7. Moteur linéaire selon une des revendications 1 à 6, **caractérisé en ce qu'**un élément de retenue (40) pour les têtes de bobine rallongées (16.1', 16.2', 16.3') est inséré dans au moins une rainure (14) d'un support d'inducteur (15) n'étant pas occupée par une bobine (16).

8. Moteur linéaire selon la revendication 7, **caractérisé en ce que** l'élément de retenue (40) est inséré de manière imperdable.

9. Moteur linéaire selon la revendication 7 ou 8, **caractérisé en ce que** l'élément de retenue (40) est une barre de retenue cylindrique (40).

10. Moteur linéaire selon une des revendications 7 à 9, **caractérisé en ce que** l'élément de retenue (40) est fabriqué en une matière non-métallique.
